# EUROPEAN PATENT SPECIFICATION

(11) **EP 2 049 606 B1**
(45) Date of publication and mention of the grant of the patent: **26.12.2018**
(21) Application number: 07789528.2
(22) Date of filing: 23.07.2007
(51) Int. Cl.: C09D 5/34, C09D 7/40, C04B 26/14, C04B 14/06, C04B 20/04, C08K 3/36, C04B 111/00, C09D 7/61, C09D 7/48, C08K 5/3435

(54) **WHITE MIXTURE FOR APPLYING A COATING**
WEISSE MISCHUNG ZUM AUFTRAGEN EINER BESCHICHTUNG
MÉLANGE BLANC POUR APPLIQUER UN REVÊTEMENT

(30) Priority: 28.07.2006 IT BO20060575
(43) Date of publication of application: 22.04.2009
(73) Proprietor: Litokol S.p.A., 42048 Rubiera (RE) (IT)
(72) Inventor: PASTORELLI, Stefano, I-42044 Gualtieri (RE) (IT)
(74) Representative: Negrini, Elena
(86) International application number: PCT/IB2007/002087
(87) International publication number: WO 2008/012641

(56) References cited:
- EP-A- 1 114 716
- WO-A-03/040048
- WO-A-2004/090054
- DE-A1- 10 150 601
- US-A- 4 992 489
- US-A1- 2001 009 939
- US-A1- 2004 134 163

## Description

### TECHNICAL FIELD

The invention consists in making a two-component epoxy mortar for laying and sealing ceramic and coating materials for interiors and exteriors. The mortar in object must be of suitable white coloration, with a white degree established by means of well defined indices, guaranteed and almost time invariant, in order to prevent yellowing.

### BACKGROUND ART

Considering the technical - scientific state of the art and the market supply, it is not possible to obtain a finished material having each one of the following features:
- to respect the requirement of mechanical resistance and seal of the laying materials, by means of the correlative definition of the constituent chemical-physical parameters, requirements defined by rules EN 13888 (Class: RG - for the reagent filler) and EN 12004 (Class: R2T - for the reagent adhesive);
- the product application for the laying of the coating materials, and the mechanical cleaning of the deflashing residue from the joints, leave residues and halos; therefore, the after laying cleaning must be possible within one stage without leaving material residues dispersed in halos, contrarily to what observed regarding the common existing and market available products of cementitious and epoxy type;
- to introduce high resistance features to acid, alkalis and chemical products commonly used for the detergency, the sanitization, and the cleaning in general (according to what established by rules UNI-EN-12808-1" "Resin reagent mortar chemical resistance definition");
- to produce a "WHITE" effect without titanium dioxide powder dispersion inside the mass ("white" obtainment not because of covering effect by means of titanium dioxide powder dispersion into the mass);
- resistance to the "aging" phenomena, induced mainly by solar radiation (and electromagnetic in general), and by exposure to the natural climatic phenomena.

Prior art documents DE 101 50 601 A1, EP 1 114 716 A, US 2001/009939 and US 2004/134163 A1 are relevant in respect to the technical field of the invention and/or to the preamble of claim 1 of the present document.

### DISCLOSURE OF THE INVENTION

The realisation of a new two-component epoxy mortar is the invention of a new chemical formulation that makes particularly valuable the use thereof, because:
- prevents the photochemical activation of the laying material;
- prevents further crosslinking of epoxy resins partially unsatured also at really long temporal distances (over three years);
- prevents the back-degradation (because of superior ossidative activities) of destabilizing materials, because of acid rainwash, accidental or systematic contact with nitrogen oxides (NOx) and sulphur oxides (SOx), contact with saline aeriform solutions and suspensions, etc;
- allows to increase the mechanical and thermodynamic manufactures stability, improving the chemical and physical resistance to the temperature ranges and thermal stresses.

The invention consists in making industrial formulations for epoxy mortar for laying and sealing with "white" permanent features, also for layings under conditions of different luminous, thermal, and weather-climatic stress, and whose cleaning post-laying of the manufactures must be possible in only one stage without leaving residual material dispersed in halos. In order to achieve these aims, it is necessary to innovate in consisting measure the known materials in order to ensure, for the customer of these materials, the best performances in terms of quantic yields and performances of product due to chemical-physical stability (time fasteness). The time effects on similar known sealing mortar, nowadays in market, occur as gradual and progressive increment of the photochromism induced by the yellowing phenomena of the material: the present invention allows to eliminate this problem.

### BRIEF DESCRIPTION OF THE INVENTION

The mixture object of the present invention, is obtained by a new formulative/productive technique that uses inert charges made of quartzous silica in order to develop suitable features of acid and alkali resistance.

In addition, to make that technique suitable for the formulation object of the invention, it must necessarily have the following features:
- chemical composition (reference values obtained by means of chemical analysis with X, XRF-Ray fluorescence techniques):
   - SiO2 ≥ 99,00 %
   - TiO2 ≤ 0,04 %
   - Fe2O3 ≤ 0,015 %
- mineralogical composition:
   - Quartz 99,00 %
   - Others 1,00 %
- granulometric distribution curve:
   - < 0,315 mm 100 - 70 %
   - < 0,212 mm 60 - 20 %
   - < 0,160 mm 15 - 4,5 %
   - < 0,125 mm 4 - 1%
   - < 0,100 mm 0,5 - 0,1 %

In addition such charge must undergo, as far as possible, a complete tarnishing process by means of suitable thermal, mechanical and chemical treatments, in order to prevent the refraction of the incident light.

The material so obtained allows the total reflection or, more correctly, the total spread of radiating beams (if the surface which the beam hits has roughness greater than dimension of incident light wavelength, the surface cannot be considered "smooth" but rough).

In order to obtain the spread of the incident light beam and to obtain the desired "white" effect (definitively proper of the invention), it is necessary that the grain of quartzous silica, having the above mentioned intrinsic chemical-physical property, is preliminary sintered.

The sintering is a heat treatment of a compact powder agglomerate, that provides an high heating until the point of incipient fusion of the main component. In this way, because of the superficial pseudo-fusion (plasticization) of grains, the removal of great part of the porosity between particles of the initial powder is possible, combined with the increasing of said particles by cooling - siliceous mass hardening - quartzous and formation of strong connections (necks) between them, in addition to a consisting phenomenon of component volume withdrawal.

Once obtained the silica base according to this procedure, the covering and painting job starts by means of epoxy or polyurethane resin. The covering and painting production process of the silica base with the above mentioned intrinsic chemical-physical properties, provides a mass mixing with the paint suitably prepared; during the mixing the temperature is increased until about 70° C, to speed up the drying phase of the varnish onto the grain surface.

After the reaction time, the product is sieved in order to eliminate eventual lumps (multi-particles agglomerates) and left stabilizing for some days. This solution prevents the colour (Titanium Dioxide) solubilization in the epoxy ligand into which it is mixed. In this way, therefore, the mass coloration of the mixture is eliminated. The mixture so obtained does not leave halos on the ceramics surface, facilitating the laying operations. The "white" coloration obtained through this productive technique is also much more brilliant than the traditional opaque "white" coloration typical of cementitious or epoxy sealants mass coloured.

The ligand is constituted of a epoxy resin made of bisphenol A and epichlorohydrin with reactive or not reactive diluting, or made of bisphenol F and epichlorohydrin, or of a mixture thereof.

In particular epoxy resins made of bisphenol F show lightly greater properties improvements of chemical, physical and mechanical resistance than epoxy resins made of bisphenol A.

Also an hydrogenated epoxy resin made of bisphenol F and epichlorohydrin can be used.

In order to confer a special rheology of "thixotropic" type to the product blurred with its catalyst, that make it possible to apply it onto vertical surfaces without runnings in the case of 20 mm and over width joints possible if used as a sealant, and without letting the tiles slipping if used as adhesive, a particular rheologic additive of organic nature is incorporated in the mixing.

In particular it refers to hydrogenated castor oil, disguised as a very fine powder dispersed under strong mixing in mixture phase with the ligand (epoxy resin) and to coloured inert charges.

In order to activate the rheologic additive, is absolutely necessary to increase the mixing temperature until 37°C - 45°C.

In partial or total substitution of the hydrogenated castor oil, other types of rheologic additives inducing "thixotropy", both liquid or powder, as an example:
- micronized amorphous silica or pyrogenic silica;
- amide poly-hydroxy-carboxylated solution;
- modified urea solution;
- bentonite;
- polyethylene fibres of medium length of 100-400 micron.

In order to improve the hydrophobic feature of the mixture and in order to improve the wettability of the system, a particular plasticizer/wetter is incorporated constituted of a not reactive diluting, comprising di-isopropil-naphthalene isomers (C16H20).

The additive is not incorporated in the polymer formation of the molecular system during the hardening, and maintains its monomolecular structure, differently from the diluting reactives that create interruptions in the epoxy net. This additive prevents not only the formation of the three-dimensional net; the empty cavities and spaces left free during the hardening are occupied by hydrophobic means, which resists also against the electrolytic attacks, reinforcing therefore the barrier function of the resin.

In addition, it supports the resin molecules and the hardening agent mobility, particularly at the beginning of the hardening, allowing to the reactives groups to react with much more speed between them.

The inert charge is constituted by spherical grains of quartzous silica having granulometry that may varies from 0,06 to 0,5 millimetres, with the above specified intrinsic chemistry-physical features; each charge grain preventively underwent the treatment of the above described sintering and is superficially covered by one epoxy or polyurethane white varnish layer.

The second component of the mixture is the hardening or catalyst, which in the present invention is important in order to neutralize the time effects (aging) on the mortar.

This component has the task to react with the epoxy resin contained in the first component and therefore to polymerize it.

The hardening is constituted by a mixture of cycloaliphatic amines (polyamide with at least an amine group directly bound in a saturated ring, modified in several ways in order to allow the hardening with ambient temperature) and amidoamine (reaction products of aliphatic amines with fat acids of tall oil, containing amidic, amine and imidazoline groups).

These two types of amines are different for several final features as an example:
- gelation time;
- film flexibility;
- adhesion to several substrates;
- chemical resistances to acids or solvents.

In particular the amidoamine are water emulsible and they also increase the resistance of our invention to the aging, while the cycloaliphatic amines are ethylic alcohol emulsible and increase the chemical resistance to acids or solvents.

The percentage of use of the two amines in the mixture, therefore takes in consideration both the property of the hardeners.

In the following table are shown, as an example, four possible compositions of base, from I to IV, of the mixture

**TYPICAL COMPOSITIONS OF THE NEW MIXTURE**

| **EPOXY LIGAND (COMPONENT A), RHEOLOGICAL PRODUCT AND ADDITIVES** | **COMPOSITIONS*** | | | |
|---|---|---|---|---|
| | **I** | **II** | **III** | **IV** |
| Epoxy resin bisphenol A | 5-25 | 5-15 | - | - |
| Epoxy resin bisphenol F | - | 5-15 | 10-20 | - |
| Hydrogenated epoxy resin bisphenol A | | | | 5-25 |
| Rheological additive based on hydrogenated castor oil | 0.5-2 | 0.5-2 | 0.5-2 | 0.5-2 |
| Secondary rheological additives | 0.1-1 | 0.1-1 | 0.1-1 | 0.1-1 |
| Plasticizer/wetting agent | 1-4 | 1-4 | 1-4 | 1-4 |
| Sintered sand 0,06 - 0,5 mm | 68-93.5 | 68-935 | 68-93.5 | 68-93.5 |
| UV Adsorber + HALS | 0.025-0.5 | 0.025-0.5 | 0.025-0.5 | 0.025-0.5 |

| **HARDENER (COMPONENT B)** | **COMPOSITIONS**** | | | |
|---|---|---|---|---|
| | **I** | **II** | **III** | **IV** |
| Cycloaliphatic amine | 50 | 33,3 | 20 | 14,3 |
| Amidoamine | 50 | 66,7 | 80 | 85,7 |

| | | | | |
|---|---|---|---|---|
| * percentages ** The amount of part B with respect to part A depends on the ratio between the equivalent weight of the active hydrogen of the mixture of hardeners and the epoxy equivalent weight of the epoxy resin. *** parts by weight per 100 parts of PART A. | | | | |

Final features of the hardened mixture:
always because of the epoxy nature of the mixture, the final mechanical features are those proper of these materials and that is:
- high mechanical resistance to flexion and compression;
- very high resistance to the abrasion;
- high chemical resistance;
- almost no absorption;
- very low shrinkage.

The mixture respects the requirements specified by the European rules EN 12004 "Adhesive for floor tiles" and EN 13888 "Sealant for floor tiles".

In particular according to the classifications defined from the rules, the mixture is identified as:
- R2T, improved reagent adhesive with no vertical slumping for ceramic tiles;
- RG, reactive sealant for ceramic tiles joints.

### BEST MODE OF CARRYING OUT THE INVENTION

The mixture for applying a coating object of the present invention comprises at least an epoxy ligand and a respective hardening in predefined proportions, and comprises also at least a solid product in particles having dimensions greater than a predefined minimal value, as an example, correspondent to the porosity and recesses dimensions of the coating material, and fit to confer predefined physical characteristic to the mixture, as defined in claim 1.

The mixture comprises also a rheologic product fit to facilitate the application of the coating through the mixture in the fluid state.

The epoxy ligand comprises epoxy resin made of bisphenol A and epichlorohydrin with reactive or not reactive diluting and/or epoxy resin based on bisphenol F and epichlorohydrin. Such resins are in the ligand singularly or, in a preferred way, mixed in different percentages according to the features of the hardened mixture.

Alternatively the invention provides that the epoxy ligand comprises a hydrogenated epoxy resin made of bisphenol A and epichlorohydrin. The hardening comprises cycloaliphatic amines, consisting in polyamide with at least an amine group bound directly to a saturate ring and modified in several ways in order to allow the hardening at ambient temperature, and/or comprises amidoamine constituted by reaction products of aliphatic amines with fat acids of tall oil, containing amidic, amine and imidazoline groups.

The invention provides that the cycloaliphatic amines and the amidoamine are present in hardening, in mutual mixture in adjustable percentages in order to modify the features of the hardened mixture.

The solid fraction in particles is constituted by quartzous silica in grain, with granulometry comprised between about 0,06 millimetres and 0,5 millimetres. In addiction, in order to be suitable for the production of the formulation object of the invention, it must necessarily have the following features:
- chemical composition (reference values obtained by means of chemical analysis with X, XRF ray fluorescence techniques)
   - SiO2 ≥ 99,00 %
   - TiO2 ≤ 0,04 %
   - Fe2O3 ≤ 0,015 %
   - Al2O3 ≤ 0,20 %
   - CaO < 0,023 %
   - P.F. 0,15 %
- Mineralogical composition:
   - Quartz 99,00 %
   - Others 1,00%
- Granulometric distribution curve:
   - < 0,315 mm 100 - 70 %
   - < 0,212 mm 60 - 20 %
   - < 0,160 mm 15-4,5%
   - < 0,125 mm 4 - 1 %
   - < 0,100 mm 0,5 - 0,1 %

The grain of the solid fraction in particles, having the above shown characteristics must undergo also a treatment of sintering and only after coloured superficially with epoxy, polyurethane varnishes of other not soluble type in the mixture in the fluid state.

The rheologic product is of such a type as to confer thixotropic characteristics to the mixture in the fluid state and comprises, as an example, hydrogenated castor oil disguised as very fine powder spread in the ligand and, in addiction or alternatively, micronized amorphous silicas, pyrogenic silica, an amide poly-hydroxy-carboxylated solution, a modified urea solution bentonite and/or fibres.

Such fibres of the rheologic product are made of polyethylene and have medium length comprised between about 100 micron and 400 micron.

The mixture comprises also a plasticizer/wetter product fit to improve the hydrophobic character and the wettability of the mixture. Such plasticizer/wetter product comprises not reactive diluting, composed of di-isopropyl-naphthalene isomers (C16H20).

In order to increase the resistance of the hardened mixture particularly to the ultraviolet beams, there is provided the employment in the product for laying of suitable molecules HALS (Hindered Amine Light Stabilizer) and UV Adsorber used in synergy, but in such a concentration that their mixture does not exceed 5% in weight calculated on the basis of resin inserted in the final formulation.

An advantage of the present invention is to provide a mixture with permanent "white" characteristics, also for laying under conditions of different luminous, thermal, and weather-climatic stress in order to apply a coating, fit to fix tiles, tesseras, slabs and similar to a wall, a pavement, or generally to a support, and that can work as a filler for the joints that is for the slits between the tiles of the coating.

Other advantage is to provide a mixture with permanent "white" characteristics, also for laying under conditions of different luminous, thermal, and weather-climatic stress almost running free, that immediately blocks the coating also in vertical applications.

Further advantage is to provide a mixture with permanent "white" characteristics, also for laying under conditions of different luminous, thermal, and weather-climatic stress that, after a simple cleaning that does not damage the joint fillings, not leave visible signs onto the visible coating faces and in particular halos and colour alterations of the coating.

Further advantage is to provide a mixture with permanent "white" characteristics, also for laying under conditions of different luminous, thermal, and weather-climatic stress fit to fix and fill coatings in a stable way, also in a water sealing and time resistance manner in internal and external adverse environmental conditions.

## Claims

1. Mixture for applying a coating comprising at least an epoxy resin either constituted of an epoxy resin made of bisphenol A and epichlorohydrin with reactive or not reactive diluting, or made of bisphenol F and epichlorohydrin, or of a mixture thereof and a hardening in proportions depending on the ratio between the equivalent weight of the active hydrogen of the mixture of hardeners and the epoxy equivalent weight of the epoxy resin, said mixture comprises a solid fraction in particles having dimensions larger than a predefined minimal value, said particles are assigned to confer a suitable white and almost time invariant coloration, and comprises also a rheologic product assigned to facilitate the coating application through the mixture in the fluid state; said mixture being **characterized in that** the particles of the solid fraction are sintered particles and said particles are coloured by means of white epoxy or polyurethane resin, were said particles of the solid fraction is constituted by quartzous silica with granulometry comprised between about 0,06 millimetres and 0,5 millimetres and having the following chemical composition features, reference values obtained by means of chemical analysis with X, XRF ray fluorescence techniques:
- SiO2 ≥ 99,00 %
- TiO2 ≤ 0,04 %
- Fe2O3 ≤ 0,02 %
- Al2O3 ≤ 0,20 %
- CaO < 0,023 %
- P.F. 0,15 %
and the following mineralogical composition features:
- Quartz 99,00 %
- Others 1,00%,
and said mixture comprises stabilizing at the light additives including HALS molecule mixtures (Hindered Amine Light Stabilizer) + UV Adsorbers used in synergy, but in such a concentration that their mixture does not exceed 5% in weight calculated on the basis of the resin inserted in the final formulation; were said hardening comprises one cycloaliphatic amine consisting of polyamide with at least an amine group directly bound in a saturated ring mixed with amidoamine consisting of a reaction product of aliphatic amines with fatty acids of tall oil.

2. Mixture according to claim **1** **characterized in that** the solid fraction in particles is non-soluble in the mixture, is coloured and produces a "white" **effect** without titanium dioxide powder dispersion inside the mass of the mixture.

3. Mixture according to claim **1** **characterized in that** the grain of the solid fraction in particles are white in order to obtain sealant having a brilliant white coloration.

4. Mixture according to claim **1** **characterized in that** the HALS molecules are of the type Bis (1,2,2,6,6-pentametyl-4-piperidyl) sebacate + Methyl 1,2,2,6,6-pentamethyl-4-piperidyl sebacate.

5. Mixture according to claim **1** **characterized in that** it comprises UV-Absorber molecules as β-[3-(2H-Benzotriazole-2-yl)-4-hidroxy-5-ter.butylphenyl]-proprionic acid-poly (ethylene glycol) 300-ester + Bis {β-3-(2-H-Benzotriazole-2-yl)-4-hydroxy-5-ter.butylphenyl]-proprionic acid}-poly (ethylene glycol) 300-ester.

6. Mixture according to claim 1 **characterized in that** the mixture of cycloaliphatic amine with amidoamine of the hardening comprises:
- 1 mixture part composed by > 40% of benzyl alcohol, > 25% of 3-aminomethyl-3,5,5-trimethylcyclohexylamine, 10% - 25% reaction product: bisphenol-A-epichlorohydrin; epoxy resins (medium molecular weight epoxy ≤ 700); and 1 mixture part composed from 25% - 50% of 3,6-diazaoctane-1-8-diamine, 10% - 25% of nonyl phenol, 1% - 5% of benzyl alcohol;
- 1 mixture part composed from 40% of benzyl alcohol, 25% of 3-aminomethyl-3,5,5-trimethylcyclohexylamine, 10% - 25% reaction product: bisphenol-A-epichlorohydrin; epoxy resins (medium molecular weight ≤ 700); and 2 mixture parts composed by 25% - 50% of 3,6-diazaoctane-1-8-diamine, 10% - 25% of nonyl phenol, 1% - 5% of benzyl alcohol;
- 1 mixture part composed from 40% of benzyl alcohol, 25% of 3-aminomethyl-3,5,5-trimethylcyclohexylamine, 10% - 25% reaction product: bisphenol-A-epichlorohydrin; epoxy resins (medium molecular weight ≤ 700); and 4 mixture parts composed from 25% - 50% of 3,6-diazaoctane-1-8-diamine, 10% - 25% of nonyl phenol, 1% - 5% of benzyl alcohol;
- 1 mixture part composed from 40% of benzyl alcohol, 25% of 3-aminomethyl-3,5,5-trimethylcyclohexylamine, 10% - 25% reaction product: bisphenol-A-epichlorohydrin; epoxy resins (medium molecular weight ≤ 700); and 6 mixture parts composed by 25% - 50% of 3,6-Diazaottano-1-8-diamine, 10% - 25% of nonyl phenol, 1% - 5% of benzyl alcohol.

7. Mixture according to claim **6** **characterized in that** the hardening comprises a cycloaliphatic amine mixture with amidoamine in ratio ranging from 1 to 1 up to 1 to 6 where the concentration of the amidoamine is grater in order to obtain a twofold improving effect in the finished product:
- an easier removal with water of the burring residues from the joints, with remarkable reduction of residues and halos;
- a remarkable improvement of the resistance to the "aging" phenomena , mainly induced by solar radiation (and electromagnetic in general) and exposure to the natural weather-climatic phenomena.

## Patentansprüche

1. Mischung zum Auftragen einer Beschichtung, umfassend zumindest ein Epoxidharz, das entweder aus einem Epoxidharz aus Bisphenol A und Epichlorhydrin mit reaktiver oder nicht reaktiver Verdünnung besteht, oder aus Bisphenol F und Epichlorhydrin oder einer Mischung davon und ein Härtemittel in Anteilen, die vom Verhältnis zwischen dem Äquivalentgewicht des aktiven Wasserstoffs der Mischung von Härtern und des Epoxidharz-Äquivalentgewichts abhängen, wobei die Mischung einen festen Anteil an Partikeln mit Abmessungen umfasst, die größer als ein vordefinierter Minimalwert sind, die Partikel zugeordnet sind, um eine geeignete weiße und nahezu zeitlich unveränderliche Farbgebung zu gewährleisten, und sie außerdem ein rheologisches Produkt umfasst, das zugeordnet ist, um die Beschichtungsaufbringung durch die Mischung in dem flüssigen Zustand zu erleichtern;
und die Mischung ist **dadurch gekennzeichnet, dass** die Partikel des festen Anteils gesinterte Partikel sind und die Partikel mittels weißem Epoxids oder Polyurethanharzes gefärbt sind, wobei die Partikel des festen Anteils aus quarzartigem Siliziumdioxid mit einer Granulometrie zwischen etwa 0,06 Millimetern und 0,5 Millimetern bestehen und die folgenden Merkmale chemischer Zusammensetzung aufweisen, Referenzwerte, die durch chemische Analyse mit Röntgen-, Röntgenfluoreszenztechniken erhalten wurden:
- SiO2 ≥ 99,00 %
- TiO2 ≤ 0,04 %
- Fe2O3 ≤ 0,02 %
- Al2O3 ≤ 0,20 %
- CaO < 0,023 %
- P.F. 0,15 %
und die folgenden Merkmale der mineralogischen Zusammensetzung:
- Quarz 99,00 %
- Andere 1,00 %,
und wobei die Mischung ein Stabilisieren an den Lichtadditiven umfasst, einschließlich GALS-Molekülmischungen (gehinderte Amin-Lichtstabilisatoren; HALS = Hindered Amine Light Stabilizer) + UV-Adsorbern, die in Synergie verwendet werden, jedoch in einer solchen Konzentration, dass ihre Mischung nicht mehr als 5 Gew.-% berechnet auf der Grundlage des in die finale Zusammensetzung eingegebenen Harzes beträgt; wobei das Härtemittel ein cycloaliphatisches Amin umfasst, das aus Polyamid mit zumindest einer Amingruppe besteht, die direkt an einen gesättigten Ring gebunden ist, der mit Amidoamin gemischt ist, das aus einem Reaktionsprodukt von aliphatischen Aminen mit Fettsäuren von Tallöl besteht.

2. Die Mischung gemäß Anspruch 1, **dadurch gekennzeichnet, dass** der feste Anteil an Partikeln in der Mischung nicht-löslich ist, gefärbt ist und einen "weißen" Effekt ohne Titandioxidpulverdispersion innerhalb der Masse der Mischung erzeugt.

3. Die Mischung gemäß Anspruch 1, **dadurch gekennzeichnet, dass** die Körnung des festen Anteils an Partikeln weiß ist, um ein Dichtungsmittel mit einer strahlend weißen Farbgebung zu erhalten.

4. Die Mischung gemäß Anspruch 1, **dadurch gekennzeichnet, dass** die GALS-Moleküle vom Typ Bis (1,2,2,6,6-Pentametyl-4-Piperidyl)-Sebacat + Methyl 1,2,2,6,6- Pentamethyl-4-Piperidyl-Sebacat sind.

5. Die Mischung gemäß Anspruch 1, **dadurch gekennzeichnet, dass** sie UV-Absorbermoleküle wie β-[3-(2H-Benzotriazol-2-yl)-4-hydroxy-5-ter.butylphenyl]-Propionsäure-poly (Ethylenglykol) 300-ester + Bis {β-[3-(2-H-Benzotriazol-2-yl)-4-hydroxy-5-ter.butylphenyl]-Propionsäure}-poly (Ethylenglykol) 300-ester umfasst.

6. Die Mischung gemäß Anspruch 1, **dadurch gekennzeichnet, dass** die Mischung aus cycloaliphatischem Amin und Amidoamin des Härtemittels umfasst:
- 1 Mischungsteil, bestehend aus > 40% Benzylalkohol, > 25% 3-Aminomethyl- 3,5,5-trimethylcyclohexylamin, 10% - 25% Reaktionsprodukt: Bisphenol-A-epichlorhydrin; Epoxidharze (mittleres Molekulargewicht Epoxid ≤ 700); und 1 Mischungsteil, bestehend aus 25% - 50% 3,6-Diazaoctan-1-8-diamin, 10% - 25% Nonylphenol, 1% - 5% Benzylalkohol;
- 1 Mischungsteil bestehend aus 40% Benzylalkohol, 25% 3-Aminomethyl-3,5,5-trimethylcyclohexylamin, 10% - 25% Reaktionsprodukt: Bisphenol-A-Epichlorhydrin; Epoxidharze (mittleres Molekulargewicht ≤ 700); und 2 Mischungsteile bestehend aus 25% - 50% 3,6-Diazaoctan-1-8-Diamin, 10% - 25% Nonylphenol, 1% - 5% Benzylalkohol;
- 1 Mischungsteil bestehend aus 40% Benzylalkohol, 25% 3-Aminomethyl-3,5,5-trimethylcyclohexylamin, 10% - 25% Reaktionsprodukt: Bisphenol-A-Epichlorhydrin; Epoxidharze (mittleres Molekulargewicht ≤ 700); und 4 Mischungsteile bestehend aus 25% - 50% 3,6-Diazaoctan-1-8-Diamin, 10% - 25% Nonylphenol, 1% - 5% Benzylalkohol;
- 1 Mischungsteil bestehend aus 40% Benzylalkohol, 25% 3-Aminomethyl-3,5,5-trimethylcyclohexylamin, 10% - 25% Reaktionsprodukt: Bisphenol-A-Epichlorhydrin; Epoxidharze (mittleres Molekulargewicht ≤ 700); und 6 Mischungsteile bestehend aus 25% bis 50% 3,6-Diazaoctan-1-8-Diamin, 10% - 25% Nonylphenol, 1% - 5% Benzylalkohol.

7. Die Mischung gemäß Anspruch 6, **dadurch gekennzeichnet, dass** das Härtemittel eine cycloaliphatische Aminmischung mit Amidoamin im Verhältnis von 1 zu 1 bis 1 zu 6 umfasst, wobei die Konzentration des Amidoamins größer ist, um eine zweifache verbessernde Wirkung im Endprodukt zu erzielen:
- eine einfachere Entfernung der Gratrückstände aus den Verbindungen mit Wasser, mit einer bemerkenswerten Reduktion von Rückständen und Höfen;
- eine bemerkenswerte Verbesserung der Widerstandsfähigkeit gegen Alterungserscheinungen, die hauptsächlich durch Sonneneinstrahlung (und elektromagnetische Strahlung im Allgemeinen) und durch die Einwirkung natürlicher witterungsklimatischer Phänomene verursacht werden.

## Revendications

1. Mélange pour appliquer un revêtement comprenant au moins une résine époxy constituée d'une résine époxy faite de bisphénol A et d'épichlorhydrine avec dilution réactive ou non réactive, ou faite de bisphénol F et d'épichlorhydrine, ou d'un mélange de celles-ci et un durcisseur dans des proportions dépendant du rapport entre le poids équivalent de l'hydrogène actif du mélange de durcisseurs et le poids équivalent en époxy de la résine époxy, ledit mélange comprenant une fraction solide en particules ayant des dimensions supérieures à une valeur minimale prédéfinie, lesdites particules étant aptes à conférer une coloration blanche appropriée et presque invariable dans le temps, et comprend également un produit rhéologique apte à faciliter l'application du revêtement par le mélange à l'état fluide ; ledit mélange étant **caractérisé par le fait que** les particules de la fraction solide sont des particules frittées et lesdites particules sont colorées au moyen d'une résine époxy ou polyuréthane blanche, lesdites particules de la fraction solide étant constituées par de la silice quartzeuse avec une granulométrie comprise entre environ 0,06 millimètre et 0,5 millimètre et ayant les caractéristiques de composition chimique suivantes, les valeurs de référence étant obtenues au moyen d'une analyse chimique avec des techniques de fluorescence des rayons X, XRF :
- SiO₂ ≥ 99,00 %
- TiO₂ ≤ 0,04 %
- Fe₂O₃ ≤ 0,02 %
- Al₂O₃ ≤ 0,20 %
- CaO < 0,023 %
- P.F. 0,15 %
et les caractéristiques de composition minéralogique suivantes :
Quartz 99,00 %
Autres 1,00 %,
et ledit mélange comprend des additifs de stabilisation à la lumière comprenant des mélanges de molécules HALS (photostabilisant à amine encombrée) + adsorbeurs de rayonnement UV utilisés en synergie, mais dans une concentration telle que leur mélange ne dépasse pas 5 % en poids calculés sur la base de la résine introduite dans la formulation finale, ledit durcisseur comprenant une amine cycloaliphatique consistant en polyamide avec au moins un groupe amine directement lié dans un noyau saturé mélangé avec une amidoamine consistant en un produit de réaction d'amines aliphatiques avec des acides gras de tallöl.

2. Mélange selon la revendication 1, **caractérisé par le fait que** la fraction solide en particules est non soluble dans le mélange, est colorée et produit un effet « blanc » sans dispersion de poudre de dioxyde de titane à l'intérieur de la masse du mélange.

3. Mélange selon la revendication 1, **caractérisé par le fait que** les grains de la fraction solide en particules sont blancs de façon à obtenir un matériau d'étanchéité ayant une coloration blanche brillante.

4. Mélange selon la revendication 1, **caractérisé par le fait que** les molécules HALS sont du type sébaçate de bis (1,2,2,6,6-pentaméthyl-4-pipéridyle) + sébaçate de méthyle et de 1,2,2,6,6-pentaméthyl-4-pipéridyle.

5. Mélange selon la revendication 1, **caractérisé par** le fait qu'il comprend des molécules d'absorbeur de rayonnement UV comme le {β-[3-(2H-benzotriazol-2-yl)-4-hydroxy-5-tert.butylphényl]-propionique acide-poly(éthylène glycol) 300 - ester + le bis {[β-3-(2-H-benzotriazol-2-yl)-4-hydroxy-5-tert.butylphényl]-propionique acide} - poly (éthylène glycol) 300 - ester.

6. Mélange selon la revendication 1, **caractérisé par le fait que** le mélange de l'amine cycloaliphatique avec l'amidoamine du durcisseur comprend :
- 1 partie de mélange composée de > 40 % d'alcool benzylique, > 25 % de 3-aminométhyl-3,5,5-triméthylcyclohexylamine, 10 % - 25 % du produit de réaction : bisphénol-A-épichlorhydrine ; résines époxy (masse moléculaire moyenne ≤ 700) ; et 1 partie de mélange composée de 25 % - 50 % de 3,6-diazaoctane-1,8-diamine, 10 % - 25 % de nonyl phénol, 1 % - 5 % d'alcool benzylique ;
- 1 partie de mélange composée de 40 % d'alcool benzylique, 25 % de 3-aminométhyl-3,5,5-triméthylcyclohexylamine, 10 % - 25 % du produit de réaction : bisphénol-A-épichlorhydrine; résines époxy (masse moléculaire moyenne ≤ 700) ; et 2 parties de mélange composées de 25 % - 50 % de 3,6-diazaoctane-1-8-diamine, 10 % - 25 % de nonyl phénol, 1 % - 5 % d'alcool benzylique ;
- 1 partie de mélange composée de 40 % d'alcool benzylique, 25 % de 3-aminométhyl-3,5,5-triméthylcyclohexylamine, 10 % - 25 % du produit de réaction : bisphénol-A-épichlorhydrine; résines époxy (masse moléculaire moyenne ≤ 700) ; et 4 parties de mélange composées de 25 % - 50 % de 3,6-diazaoctane-1,8-diamine, 10 % - 25 % de nonyl phénol, 1 % - 5 % d'alcool benzylique ;
- 1 partie de mélange composée de 40 % d'alcool benzylique, 25 % de 3-aminométhyl-3,5,5-triméthylcyclohexylamine, 10 % - 25 % du produit de réaction : bisphénol-A-épichlorhydrine ; résines époxy (masse moléculaire moyenne ≤ 700) ; et 6 parties de mélange composées de 25 % - 50 % de 3,6-diazaoctane-1,8-diamine, 10 % - 25 % de nonyl phénol, 1 % - 5 % d'alcool benzylique.

7. Mélange selon la revendication 6, **caractérisé par le fait que** le durcisseur comprend un mélange d'amine cycloaliphatique avec une amidoamine dans un rapport se situant dans la plage de 1 à 1 jusqu'à 1 à 6, la concentration de l'amidoamine étant supérieure de façon à obtenir un effet d'amélioration de deux fois dans le produit fini :
- un retrait plus facile avec l'eau des résidus d'ébavurage à partir des joints, avec une réduction remarquable des résidus et halos ;
- une amélioration remarquable de la résistance au phénomène de « vieillissement », principalement induit par un rayonnement solaire (et électromagnétique en général) et une exposition aux phénomènes naturels météorologiques-climatiques.
